# FASCICULE DE BREVET EUROPEEN

(11) **EP 2 197 290 B1**
(45) Date de publication et mention de la délivrance du brevet: **06.04.2016**
(21) Numéro de dépôt: 08838525.7
(22) Date de dépôt: 10.10.2008
(51) Int. Cl.: A23F 3/32, A23F 5/12, A23L 2/395, A23P 10/28, C11D 17/00

(54) **PROCEDE DE COMPACTION D'UNE COMPOSITION PULVERULENTE A VOLUME CONSTANT**
VERFAHREN ZUR PRESSUNG EINER PULVERZUSAMMENSETZUNG AUF EIN KONSTANTES VOLUMEN
METHOD FOR COMPACTING A POWDERY COMPOSITION TO A CONSTANT VOLUME

(30) Priorité: 12.10.2007 FR 0758272; 26.02.2008 WO PCT/EP2008/052311; 18.07.2008 FR 0854909
(43) Date de publication de la demande: 23.06.2010
(73) Titulaire: Eurotab, 42170 Saint Just Saint Rambert (FR)
(72) Inventeur: BRANLARD, Paul, F-69005 Lyon (FR); BROSSE, Jacques, F-42320 La Grand Croix (FR); KIRCHHOFF, Laurent, F-42170 St Just St Rambert (FR); RUBINSTENN, Gilles, F-75005 Paris (FR)
(74) Mandataire: Regimbeau
(86) Numéro de dépôt international: PCT/EP2008/063597
(87) Numéro de publication internationale: WO 2009/047322

(56) Documents cités:
- EP-A- 0 229 920
- CA-A- 808 588
- US-A- 3 121 635
- US-A- 3 511 666
- US-A- 3 770 457

## Description

La présente invention concerne un procédé de compaction de compositions pulvérulentes et notamment de compositions ayant des propriétés élastiques ou thermofusibles.

Pour des raisons de facilité de transport, de manipulation et d'utilisation, il est de plus en plus courant de disposer de produits compacts. Ainsi, dans de nombreux domaines, on cherche à transformer des composés originalement sous une forme pulvérulente en produits compacts afin de faciliter et de sécuriser leur transport, leur manipulation et leur utilisation.

Toutefois, la compaction de certains composés sous forme de poudres à des cadences suffisantes pour autoriser une exploitation industrielle est rendue particulièrement difficile du fait de la composition chimique ou des caractères physiques de ces poudres. En effet, certaines poudres peuvent présenter une forte composante de déformation élastique, ou et de changement d'état avec passage de solide à pâteux voir liquide sous l'action des contraintes mécaniques générées par la compaction. Ces caractéristiques entraînent une instabilité des produits obtenus par compaction de ces poudres selon les procédés classiques de compaction de l'art antérieur : ainsi les produits obtenus peuvent être instables, fragiles et sujets à l'attrition lorsqu'on a utilisé une faible force de compaction. Au contraire, les produits obtenus présentent des phénomènes de clivage ou de collage, et donc une fragilité insatisfaisante, lorsqu'on utilise une force de compaction élevée. Les documents EP 0 229 920**,** CA 808 588**,** US 3,511,666 et US 3,121,635 donnent des exemples de tels procédés où la compaction est réalisée en appliquant une pression déterminée, qui peut être maintenue pendant un certain temps.

Ainsi, par exemple, la compaction de composés végétaux sous forme de poudres à des cadences suffisantes pour autoriser une exploitation industrielle est rendue particulièrement difficile du fait de la composition chimique des végétaux naturels composant ces poudres. En effet, les composés végétaux présents dans ces poudres comprennent souvent des polymères ou mélanges de polymères naturels hautement hétérogènes, comme par exemple de la cellulose, de l'hémicellulose, de la lignine, qui présentent une forte composante de déformation élastique. Pourtant, il serait utile de pouvoir disposer de produits compacts à base de composés végétaux naturels préalablement broyés et se trouvant à l'état de poudres.

Il peut être proposé d'ajouter à ces poudres des excipients pour limiter ces effets. Toutefois, en particulier dans le domaine de l'alimentaire, ces excipients doivent pouvoir être ingérés. Ils ne doivent pas non plus altérer le goût ou l'effet du produit alimentaire dans lequel ils sont rajoutés. D'une façon plus générale, il est toujours souhaitable de ne pas avoir besoin de recourir à la complexification de la formule initiale.

Ainsi, il existe le besoin d'un procédé permettant de compacter de façon industrielle des poudres, ayant des propriétés élastiques, des propriétés thermofusibles ou, de manière plus générale, une tendance à changer d'état sous l'action de la compaction, afin d'obtenir des produits compacts présentant une stabilité et une résistance les rendant faciles à transporter et à manipuler.

Le problème est donc de développer des produits compacts. La demanderesse a maintenant constaté de façon surprenante que le compactage des poudres à volume constant plutôt qu'à pression constante permet d'obtenir des produits à la fois suffisamment résistants et conservant leurs propriétés.

Le procédé selon l'invention permet avantageusement d'obtenir des produits compacts à partir de poudres ayant des propriétés élastiques ou thermofusibles.

Avantageusement, le procédé selon l'invention permet de fournir des produits compacts ayant une bonne solidité lors des manipulations normales des dits produits.

Un autre avantage de l'invention est que le procédé permet la fabrication de grandes séries de produits compacts avec une haute productivité à partir de compositions pulvérulentes ayant une composante élastique ou thermoplastique.

De façon particulièrement avantageuse, le procédé selon l'invention permet la compaction de compositions pulvérulentes destinées à l'alimentation sans altérer leurs propriétés gustatives.

### Description de l'invention

L'invention a donc pour objet un procédé de préparation d'un produit compact solide de volume déterminé à partir d'une composition pulvérulente comprenant les étapes suivantes :
a) placer dans un espace confiné un volume initial d'une composition pulvérulente contenant au moins une poudre ayant des propriétés élastiques ou thermofusibles,
b) compacter ladite composition pulvérulente du volume initial jusqu'à un volume de compaction inférieur ou égal au volume déterminé,
c) maintenir ladite composition pulvérulente à un volume constant égal audit volume de compaction au moyen d'une force de maintien variable, jusqu'à ce que la force de maintien diminue d'au moins 10 %,
d) relâcher la contrainte de volume,
e) obtenir le produit compact solide de volume déterminé.

Avantageusement, dans le procédé selon l'invention la composition pulvérulente contient au moins une poudre ayant des propriétés élastiques et/ou thermofusibles.

Dans un mode de réalisation préféré, la composition pulvérulente est constituée de particules ayant une taille comprise entre 10 et 3000 microns de préférence entre 100 et 1500 microns.

Dans un autre mode de réalisation préféré, la quantité de composition pulvérulente mise en oeuvre à l'étape a) est comprise entre 0,5 grammes et 600 grammes de préférence entre 0,5 et 100 grammes, plus préférentiellement entre 1 et 50 grammes.

De façon préférée, le volume de compaction est compris entre 20 et 95% du volume initial de la composition pulvérulente, et préférentiellement entre 30 et 75% du volume initial de la composition pulvérulente.

Avantageusement, le temps nécessaire pour compacter à l'étape b) est compris entre 1 et 3000 millisecondes, et plus avantageusement entre 10 et 1500 millisecondes.

Avantageusement, le temps nécessaire pour le maintien de la composition au volume de compaction à l'étape c) est compris entre 100 et 2500 millisecondes, et plus avantageusement entre 150 et 1500 millisecondes.

Avantageusement, le temps nécessaire pour relâcher la contrainte de volume à l'étape d) est compris entre 10 et 1000 millisecondes, plus avantageusement entre 15 et 500 milisecondes.

Dans un mode de réalisation préféré, la force de maintien diminue de 10 à 60% à l'étape c) du procédé selon l'invention.

L'invention a aussi pour objet les produits obtenus par le procédé selon l'invention.

Le procédé selon la présente invention est particulièrement adapté à la compaction de compositions pulvérulentes comprenant au moins une poudre ayant des propriétés élastiques ou des propriétés thermofusibles. Le procédé selon l'invention est aussi adapté à la compaction de compositions pulvérulentes ayant une tendance à changer d'état lors de la compaction passant par exemple d'un état solide à un état pâteux ou liquide. Il peut s'agir de compositions pulvérulentes ayant un forte teneur en humidité.

Par « élastique », on entend un matériau qui a la propriété de reprendre, partiellement ou totalement, sa forme ou son volume, après les avoir perdus par compression ou extension.

Par « thermofusible », on entend un matériau qui devient fluide sous l'effet de la chaleur.

Dans un mode de réalisation, les compositions pulvérulentes mis en oeuvre dans les procédés selon la présente invention sont constituées d'une poudre ou d'un mélange de poudres dont au moins l'une a des propriétés élastiques ou thermofusibles.

Dans un mode de réalisation particulier de l'invention, le procédé permet la compaction de compositions pulvérulentes à base de matériaux végétaux.

Le procédé peut être mis en oeuvre avec des ingrédients végétaux tels que du café, du thé ou de la chicorée ou des ingrédients végétaux aptes à faire des tisanes comme le thym, le romarin, le tilleul, le ginseng, le ginko, la marjolaine, la menthe, la verveine, le gingembre, le « wild yam », les plantes de la famille *rosmarinus officinalis,* et leurs mélanges.

Les composés végétaux mis en oeuvre dans l'invention se présentent généralement sous forme de grains ou de feuilles brisés ou broyés, et ayant éventuellement subi un ou plusieurs traitements préalables connus en soi.

Le procédé selon la présente invention peut en particulier être appliqué à des matériaux tels que la cellulose, l'hemicellulose, la lignine et leurs mélanges. On peut aussi appliquer l'invention aux fibres de bois, algues, thé, herbes aromatiques, tiges de plants broyées sèches, compost, fleurs séchées.

Selon un autre mode de réalisation particulier de l'invention, le procédé de compaction est en particulier adapté à la compaction de tous types de poudres alimentaires comprenant des glucides, lipides et/ou protéines.

Dans un autre mode de réalisation de l'invention, le procédé est mis en oeuvre pour la compaction de compositions pour le lavage du linge de type lessive.

Ces compositions comprennent typiquement : des agents séquestrants, des agents alcalins, des agents de blanchiment, des tensioactifs (sous forme liquide, solide, supportée sur des zéolites, bentonites ou des argiles en général) anioniques, cationiques ou non ioniques, des activateurs de l'agent blanchiment, des enzymes, des agents d'éclatement, des agents liants des parfums, des colorants, des antimousses, des azurants optiques, des agents anti transfert de couleur dont les agents d'éclatement type cellulose ont des propriétés élastiques, les agents liants exemple les polyethylène glycol solides, les tensioactifs solides type SDS, ou les tensioactifs liquides supportés sur bentonite ont des comportements thermofusibles.

De manière générale, le procédé selon l'invention convient à la compaction de tous types de matériaux et plus particulièrement aux matériaux se présentant sous la forme d'une composition pulvérulente ayant des propriétés élastiques ou thermofusibles.

Le procédé selon l'invention permet d'obtenir un produit compact solide à partir d'une composition pulvérulente. Dans les procédés selon la présente invention, un volume initial de poudre est compacté jusqu'à un volume de compaction puis la poudre est maintenue à ce volume constant par le moyen d'une force de maintien variable pendant un temps donné. La force de maintien diminuant progressivement au cours du maintien au volume de compaction constant.

La première étape consiste à placer un volume initial de la composition pulvérulente dans un espace confiné. Celui-ci peut avoir une forme particulière en fonction de la forme recherchée pour le produit compacté. Par volume initial de la composition pulvérulente on entend le volume de la poudre relâchée avant compaction telle qu'elle est placée dans l'espace confiné.

Ensuite, il est procédé à la compaction de la composition pulvérulente jusqu'à un volume de compaction. Le volume de compaction est inférieur au volume initial de la composition pulvérulente. De façon préférée, le volume de compaction est compris entre 20 et 95% du volume initial de la composition pulvérulente, et préférentiellement entre 30 et 75% du volume initial de la composition pulvérulente. Cette réduction de volume ou ce taux de compaction dépend de la densité apparente de la composition pulvérulente mise en oeuvre dans le procédé selon l'invention.

Par ailleurs, le volume de compaction est inférieur ou égal au volume déterminé du produit compact. Par volume déterminé du produit compact, on entend le volume final du produit compact et donc le volume que l'on souhaite obtenir. En effet, lorsque la composition pulvérulente est particulièrement élastique il peut y avoir une extension du produit lors du relâchement de la contrainte de volume. Typiquement, le volume de compaction représente 50 à 100% du volume déterminé ou final du produit compact. Ceci dépend essentiellement des propriétés élastiques des matériaux constituant la composition pulvérulente.

A l'étape suivante, la composition pulvérulente est maintenue à un volume constant qui correspond au volume de compaction. Le temps de maintien à volume de compaction constant est essentiel pour l'obtention de produits compacts satisfaisants. Ce temps de maintien peut être déterminé expérimentalement.

La composition pulvérulente présente une résistance et il est donc nécessaire d'exercer une force de maintien pour conserver le volume de compaction constant. Au cours de cette étape, la résistance de la composition pulvérulente va diminuer progressivement. La force de maintien nécessaire pour maintenir le volume de compaction constant diminuera donc de façon concomitante. La mesure de cette force de maintien et de sa variation au cours du maintien à volume de compaction constant permet de déterminer le temps pendant lequel la composition doit être maintenue au volume de compaction constant. La force de maintien au cours du temps peut être mesurée selon des techniques connues de l'homme du métier. Ainsi, la mesure de la force de maintien au cours du temps permet de déterminer la courbe de compression d'une composition pulvérulente donnée. Cette courbe de compression étant propre à chaque composition pulvérulente en fonction de ses propriétés élastiques ou thermofusibles ou encore en fonction de sa teneur en humidité.

Avantageusement, la demanderesse a trouvé que la force de maintien à volume de compaction constant doit être maintenue au moins jusqu'à la perte d'au moins 10% de la force de résistance de la composition pulvérulente.

Ainsi, la composition est maintenue à volume de compaction constant jusqu'à ce que la force de maintien nécessaire diminue d'au moins 10, 20, 30, 40, 50 ou 60%.

Un autre avantage de l'invention est qu'il n'est pas nécessaire d'exercer une force de maintien élevée entraînant une modification des matériaux compactés. Dans le cas par exemple de poudres alimentaires, le procédé selon l'invention permet ainsi de conserver les propriétés gustatives des produits. De manière générale, les propriétés des matériaux de départ sont conservées. De préférence, il n'y a pas ou peu de « surcompression », d'exsudation excessive, de liquéfaction ou de changement d'état des matériaux constituant la composition pulvérulente au cours du procédé selon l'invention.

Typiquement, la force de maintien initiale nécessaire au maintien à volume de compaction constant est comprise entre 10kN et 100kN, de préférence entre 20kN et 80kN, 20kN et 60kN et plus préférentiellement entre 20kN et 50kN. Etant entendu que cette force de maintien diminue progressivement au cours du maintien à volume de compaction constant.

De préférence, le temps de maintien à volume constant est supérieur au temps de compaction et au temps de relâchement.

Le procédé se termine ensuite par le relâchement de la force de maintien ou de la contrainte de volume et par la récupération du produit compact solide.

La compaction selon l'invention s'effectue de préférence avec un système de compactage (ou formage) dans laquelle la force appliquée est transmise par déplacement sur une longueur déterminée de une ou deux parois (appelées quelquefois poinçon) entourant le matériau à compacter.

Un mode de réalisation avantageux selon l'invention consiste à mettre en oeuvre une presse à came, c'est-à-dire où le déplacement de la ou des paroi(s) de l'espace de confinement est déterminé par une bielle dont le mouvement est déterminé par une came, les résultats de l'invention étant beaucoup plus faciles à obtenir que si l'on tente d'utiliser une presse hydraulique.

Ces presses comportent avantageusement un tube de type extrudeur, avec un poinçon à un bout, ou un poinçon à chaque bout.

La présente invention permet la préparation de produits compacts stables, résistants, donc faciles à manipuler et à stocker.

Avantageusement, le produit final obtenu a les propriétés suivantes :
- une masse comprise 0,5 grammes et 600 grammes de préférence entre 0,5 et 100 grammes, préférentiellement entre 1 et 50 grammes ;
- un taux de compaction compris entre 20 et 95%, de préférence supérieur à 30% ;
- une dureté comprise entre 20 et 500 kN, de préférence supérieure à 25 kN.

Dans un mode de réalisation préféré, le produit compact solide a la forme d'une pastille ou d'une tablette.

Dans un mode de réalisation particulier, le produit compact a une porosité comprise entre 5% et 80%, de préférence inférieure à 70%. Pour certaines applications, il est avantageux de disposer de produits compacts qui se délitent facilement dans l'eau. Ceci peut par exemple être obtenu grâce à une certaine porosité du produit.

Les exemples et figures, donnés à titre non limitatif, illustrent l'invention, et montrent comment elle peut être mise en oeuvre.

### Figures

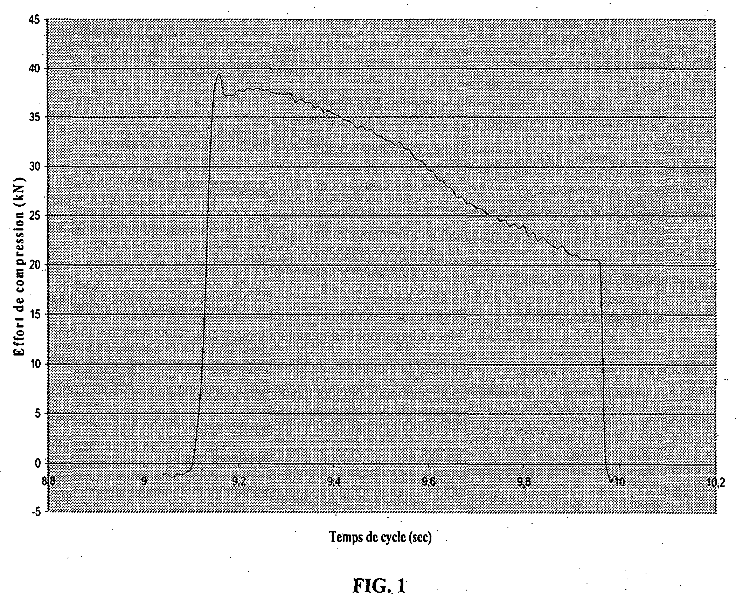

- Figure 1 :: Courbe de compression du café de l'exemple 1

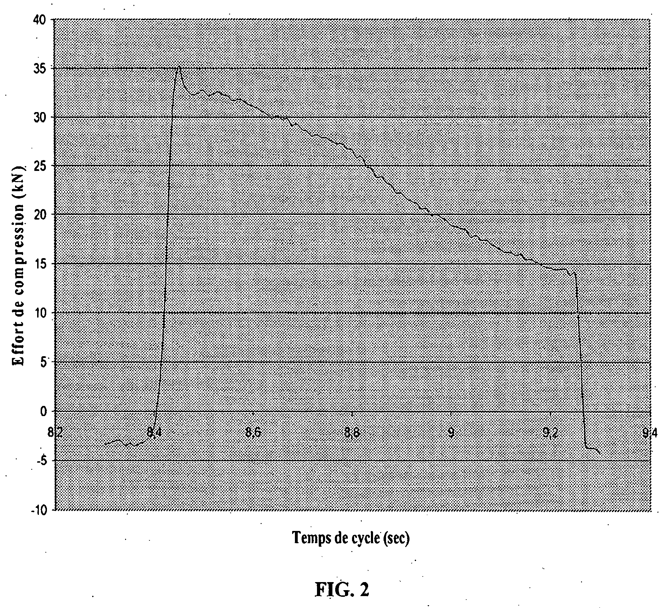

- Figure 2 :: Courbe de compression du café de l'exemple 2

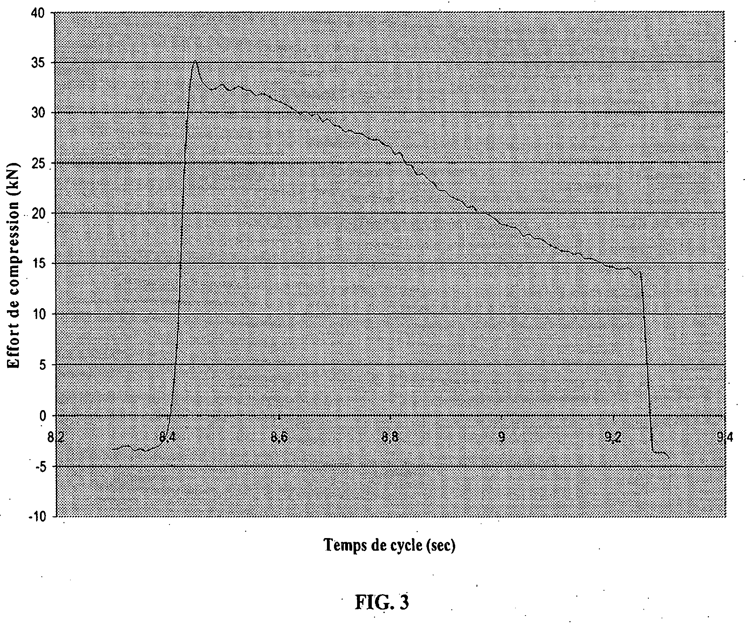

- Figure 3 :: Courbe de compression du café de l'exemple 3

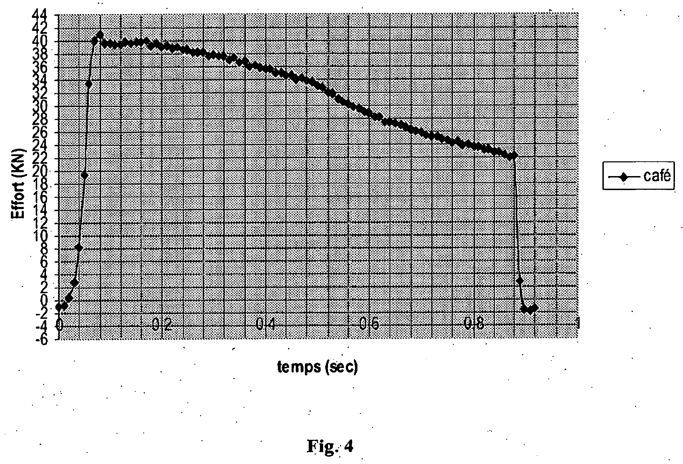

- Figure 4 :: Courbe de compression du café de l'exemple 10

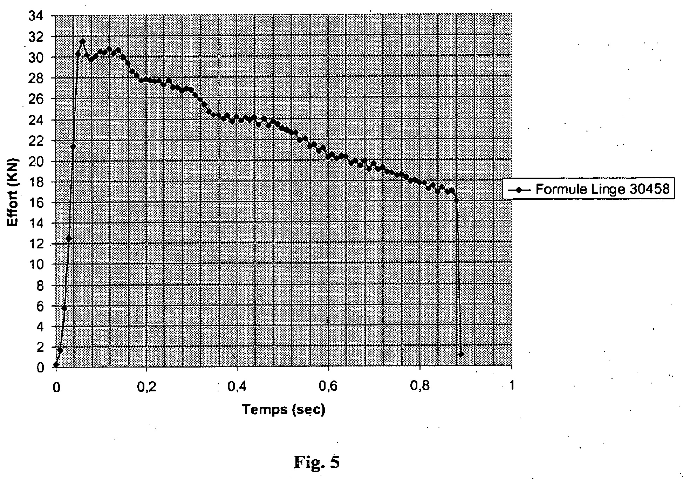

- Figure 5 :: Courbe de compression de la formule linge de l'exemple 11

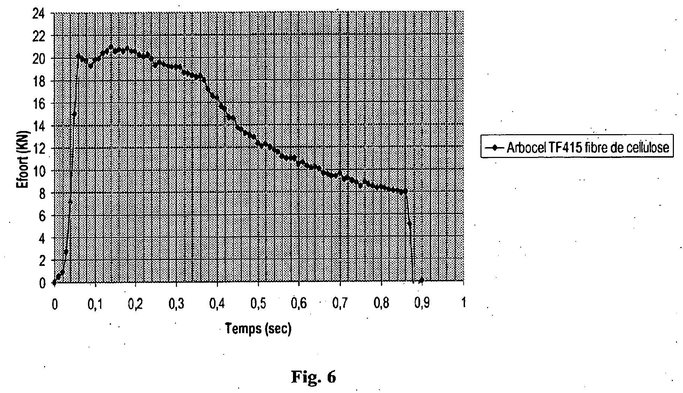

- Figure 6 :: Courbe de compression de la cellulose de l'exemple 12

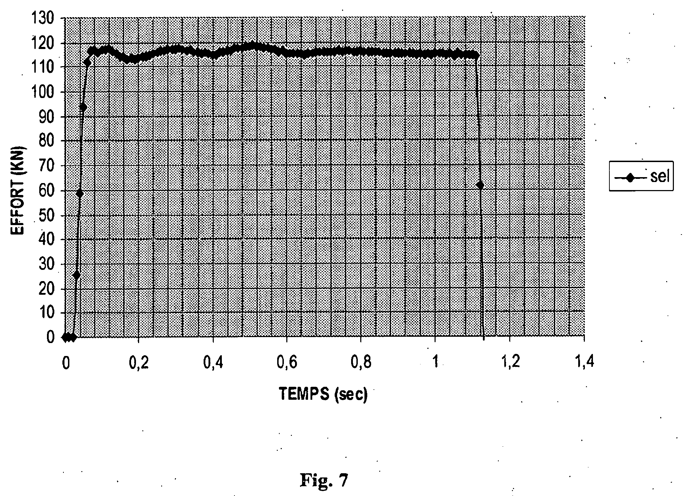

- Figure 7 :: Courbe de compression du sel de l'exemple 13

### Exemples

### Exemple 1

Du café rôti et moulu en grain de taille moyenne 1mm, et ayant une perte en matières volatiles de 4 % après un séjour de 20mn à 120°C, est compacté à l'aide d'un système de compactage permettant d'arriver à un volume constant contrôlé. 7g de poudre sont réduits jusqu'à 30% de leur volume initial en 0.4 seconde, et ce volume est maintenu durant 0.85 seconde. On obtient une pastille plate cylindrique de densité 0.76 g/cm3. Cette pastille a une perte en matières volatiles de 4 % après un séjour de 20mn à 120°C ; sous 40 megapascal à 20°C, elle exsude 0.05% d'huile ; sous 100 megapascal à 20°C elle exsude 0.25% d'huile. On applique une force de 50 Newton selon un diamètre transversal ; la pastille n'est pas endommagée. 5 pastilles semblables tombent de 1.5m et donnent une perte en poids par brisement supérieure à 30% ; 5 autres pastilles tombant de 1m donnent une perte en poids de 3% seulement.

### Exemples 2 à 9

On reproduit l'exemple 1 avec différentes conditions opératoires. Ces conditions et les résultats obtenus sont indiqués, avec ceux de l'exemple 1, dans le tableau suivant, les autres conditions et résultats étant les mêmes qu'à l'exemple 1.

| **EXEMPLE** | **1** | **2** | **3** | **3** | **5** | **6** | **7** | **8** | **9** |
|---|---|---|---|---|---|---|---|---|---|
| Quantité de poudre mise en oeuvre, en grammes | 7 | 7 | 7 | 7 | 7 | 6 | 8 | 7 | 7 |
| Compaction avec réduction de volume de la poudre (exprimé en pourcent) | 30 | 30 | 30 | 30 | 30 | 30 | 30 | 40 | 20 |
| Durée en secondes de la compaction avant d'atteindre le volume minimal final | 0.4 | 0.4 | 0.4 | 0.4 | 0.4 | 0.4 | 0.4 | 0.4 | 0.4 |
| Durée en secondes du maintien sous force du volume constant (de la pastille) | 0.85 | 0.65 | 0.85 | 0.85 | 1.1 | 1.1 | 0.65 | 1.1 | 0.65 |
| Densité de la pastille produite en g/cm3 | 0.76 | 0.69 | 0.82 | 0.65 | 0.87 | 0.63 | 0.81 | 0.69 | 0.90 |
| Perte en matières volatiles de la poudre de départ et de la pastille d'arrivée, en 20mn à 120°C (en pourcent) | 4 | 4 | 6 | 3 | 4 | 4 | 4 | 4 | 4 |
| Exsudation à 40 megapascal en pourcent | 0.05 | 0.05 | 0.05 | 0.05 | 0.05 | 0.05 | 0.05 | 0.02 | 0.02 |
| Exsudation à 100 megapascal en pourcent | 0.245 | 0.245 | 0.28 | 0.21 | 0.245 | 0.21 | 0.315 | 0.22 | 0.26 |
| Force, en Newtons, appliquée selon un diamètre transversal sans qu'il y ait brisement | 50 | 40 | 55 | 35 | 60 | 33 | 55 | 40 | 60 |
| Perte de poids par brisement de 5 pastilles chutant de 1m | 3 | 4 | 3 | 5 | 1 | 3 | 2 | 4 | 1 |
| Perte de poids, en %, par brisement de 5 pastilles chutant de 1.5m | > 30 | > 40 | > 20 | > 40 | > 20 | >35 | > 28 | > 50 | > 15 |

### Exemple 10

Du café rôti et moulu en grain de taille moyenne 1mm, et ayant une perte en matières volatiles de 3,3 % après un séjour de 20mn à 120°C, est compacté à l'aide d'un système de compactage permettant d'arriver à un volume constant contrôlé. Le poinçon utilisé pour cette compression est un poinçon rond de diamètre 32mm avec chanfrein. 7 grammes de ce produit sont introduits dans la chambre de compaction représentant une hauteur de remplissage de 27,3 mm. La hauteur de compression finale est fixée à 8,3 mm conduisant à une réduction de volume de 70%. Cette hauteur de compression est maintenue pendant un temps de 800 millisecondes. L'effort maximal mesuré est de 40KN, et seulement de 20KN après les 800 millisecondes de temps de maintien. Nous pouvons donc en déduire qu'il est nécessaire d'assurer un temps de maintien afin d'obtenir une tablette cohésive. Dans le cas présent le temps de maintien minimum pour obtenir une tablette cohésive et transportable est de 400 millisecondes. A 400 millisecondes la force résultante est de 30KN. La chute de cette force de maintien est égale à 25%.

### Exemple 11

Une formulation linge de la société Eurotab® dénommée 30458 est testée afin de vérifier si il est nécessaire de maintenir un temps de maintien à volume constant pour obtenir une tablette cohésive et transportable. Pour ce test un poinçon rond de diamètre 45mm avec chanfrein, poinçon standard pour l'application tablette linge, est utilisé. 40 grammes de cette formulation 30458 sont introduits dans la chambre de compaction représentant une hauteur de remplissage de 38mm. La hauteur de compression finale est fixée 18mm conduisant à une réduction de volume de 53%. Cette hauteur de compression est maintenue pendant un temps de 800 millisecondes. L'effort maximal mesuré est de 31,5KN, et seulement de 18KN après les 800 millisecondes de temps de maintien. Nous pouvons donc en déduire qu'il est nécessaire d'assurer un temps de maintien afin d'obtenir une tablette cohésive. Dans le cas présent le temps de maintien minimum pour obtenir une tablette cohésive et transportable est de 100 millisecondes. A 112 millisecondes la force résultante est de 28KN. La chute de cette force de maintien est égale à 11%.

**Composition tablette pour linge blanc**

| | |
|---|---|
| **Agents sequestrants (phosphates, citrate, polymères, zeolithe..)** | **35-50%** |
| **Agents alcalins (silicate de soudé, carbonate)** | **10-30%** |
| **Charge (bicarbonate, sulfate de sodium..)** | **3-20%** |
| **Tensio actifs non ionique et anionique** | **10-18%** |
| **enzymes** | **0,5-3%** |
| **Agents de blachiment et activateur** | **10-20%** |
| **Liant (polyethylène glycol poudre..)** | **1-5%** |
| **Agents désintégrants (cellulose..)** | **2-8%** |
| **Azurant optique** | **0-1%** |
| **Anti mousse** | **0-1%** |
| **parfum** | **0,5% - 1%** |
| **colorant** | **0,05% -0,1%** |

### Exemple 12

L'ARBOCEL™ TF 415 (cellulose), commercialisée par la société Rettenmaier ®, est testée afin de vérifier si il est nécessaire de maintenir un temps de maintien à volume constant pour obtenir une tablette cohésive et transportable. Pour ce test un poinçon rond de diamètre 32mm avec chanfrein, poinçon est utilisé. 8,45 grammes de cet ARBOCEL™ TF 415 sont introduits dans la chambre de compaction représentant une hauteur de remplissage de 28mm. La hauteur de compression finale est fixée 9 mm conduisant à une réduction de volume de 68%. Cette hauteur de compression est maintenue pendant un temps de 800 millisecondes. L'effort maximal mesuré est de 21KN, et seulement de 8KN après les 800 millisecondes de temps de maintien. Nous pouvons donc en déduire qu'il est nécessaire d'assurer un temps de maintien afin d'obtenir une tablette cohésive. Dans le cas présent le temps de maintien minimum pour obtenir une tablette cohésive et transportable est de 300 millisecondes. A 300 millisecondes la force résultante est de 18KN. La chute de cette force de maintien est égale à 14,3%.

### Exemple 13

Le chlorure de sodium est testée afin de vérifier si il est nécessaire de maintenir un temps de maintien à volume constant pour obtenir une tablette cohésive et transportable. Pour ce test un poinçon rond de diamètre 32mm avec chanfrein, poinçon est utilisé. 20 grammes de ce chlorure de sodium sont introduits dans la chambre de compaction représentant une hauteur de remplissage de 18,3mm. La hauteur de compression finale est fixée 9,2mm conduisant à une réduction de volume de 49,7%. Cette hauteur de compression est maintenue pendant un temps de 800 millisecondes. L'effort maximal mesuré est de117 KN, et de 115KN après les 800 millisecondes de temps de maintien. Nous pouvons donc en déduire qu'il n'est pas nécessaire d'assurer un temps de maintien afin d'obtenir une tablette cohésive, la chute de cette force de maintien étant inférieure à 10%

## Revendications

1. Procédé de préparation d'un produit compact solide de volume déterminé à partir d'une composition pulvérulente **caractérisé en ce qu'**il comprend les étapes successives suivantes :
a) placer dans un espace confiné un volume initial d'une composition pulvérulente contenant au moins une poudre ayant des propriétés élastiques ou thermofusibles,
b) compacter ladite composition pulvérulente du volume initial jusqu'à un volume de compaction inférieur ou égal au volume déterminé,
c) maintenir ladite composition pulvérulente à un volume constant égal audit volume de compaction au moyen d'une force de maintien variable, jusqu'à ce que la force de maintien diminue d'au moins 10 %,
d) relâcher la contrainte de volume,
e) obtenir le produit compact solide de volume déterminé.

2. Procédé selon la revendication 1 **caractérisée en ce que** la composition pulvérulente est constituée de particules ayant une taille comprise entre 10 et 3000 microns.

3. Procédé selon l'une des revendications précédentes **caractérisée en ce que** la quantité de composition pulvérulente mise en oeuvre à l'étape a) est comprise entre 0,5 grammes et 100 grammes.

4. Procédé selon l'une des revendications précédentes **caractérisé en ce que** le volume de compaction est compris entre 20% et 95% du volume initial de la composition pulvérulente.

5. Procédé selon l'une des revendications précédentes **caractérisé en ce que** le temps nécessaire pour compacter à l'étape b) est compris entre 1 milliseconde et 3000 millisecondes.

6. Procédé selon l'une des revendications précédentes **caractérisé en ce que** le temps nécessaire pour le maintien de la composition pulvérulente au volume de compaction à l'étape c) est compris entre 100 millisecondes et 2500 millisecondes.

7. Procédé selon l'une des revendications précédentes **caractérisé en ce que** le temps nécessaire pour relâcher la contrainte de volume à l'étape d) est compris entre 10 millisecondes et 1000 millisecondes.

8. Procédé selon l'une des revendications précédentes **caractérisé en ce qu'**à l'étape c) la force de maintien diminue d'une valeur comprise entre 10% et 60%.

9. Procédé selon l'une des revendications précédentes **caractérisé en ce qu'**il comprend une étape préliminaire consistant à mesurer une force de maintien nécessaire pour maintenir ladite composition pulvérulente à un volume constant égal audit volume de compaction, et à déterminer la courbe de compression de ladite composition pulvérulente représentant les variations de la force de maintien au cours du maintien de ladite composition pulvérulente à un volume constant égal au volume de compaction.

## Patentansprüche

1. Verfahren zur Herstellung eines festen kompakten Produkts mit bestimmtem Volumen ausgehend von einer pulverförmigen Verbindung, **dadurch gekennzeichnet, dass** es die folgenden aufeinanderfolgenden Schritte umfasst:
a) Unterbringen eines Ausgangsvolumens einer pulverförmigen Verbindung, die mindestens ein Pulver enthält, das elastische oder heißschmelzende Eigenschaften aufweist, in einem geschlossenen Raum,
b) Verdichten der pulverförmigen Verbindung des Ausgangsvolumens bis zu einem Verdichtungsvolumen, das kleiner oder gleich dem bestimmten Volumen ist,
c) Halten der pulverförmigen Verbindung bei einem konstanten Volumen, das gleich dem Verdichtungsvolumen ist, mittels einer variablen Haltekraft, bis die Haltekraft um mindestens 10% abnimmt,
d) Lockern der Volumenspannung,
e) Erhalten des festen kompakten Produkts mit bestimmtem Volumen.

2. Verfahren nach Anspruch 1, **dadurch gekennzeichnet, dass** die pulverförmige Verbindung aus Teilchen besteht, die eine Größe aufweisen, die zwischen 10 und 3000 Mikrometer enthalten ist.

3. Verfahren nach einem der vorhergehenden Ansprüche, **dadurch gekennzeichnet, dass** die Menge der pulverförmigen Verbindung, die in Schritt a) eingesetzt wird, zwischen 0,5 Gramm und 100 Gramm enthalten ist.

4. Verfahren nach einem der vorhergehenden Ansprüche, **dadurch gekennzeichnet, dass** das Verdichtungsvolumen zwischen 20 % und 95 % des Ausgangsvolumens der pulverförmigen Verbindung enthalten ist.

5. Verfahren nach einem der vorhergehenden Ansprüche, **dadurch gekennzeichnet, dass** die Zeit, die erforderlich ist, um beim Schritt b) zu verdichten, zwischen 1 Millisekunde und 3000 Millisekunden enthalten ist.

6. Verfahren nach einem der vorhergehenden Ansprüche, **dadurch gekennzeichnet, dass** die Zeit, die zum Halten der pulverförmigen Verbindung auf dem Verdichtungsvolumen im Schritt c) erforderlich ist, zwischen 100 Millisekunden und 2500 Millisekunden enthalten ist.

7. Verfahren nach einem der vorhergehenden Ansprüche, **dadurch gekennzeichnet, dass** die Zeit, die erforderlich ist, um die Volumenspannung im Schritt d) zu lockern, zwischen 10 Millisekunden und 1000 Millisekunden enthalten ist.

8. Verfahren nach einem der vorhergehenden Ansprüche, **dadurch gekennzeichnet, dass** im Schritt c) die Haltekraft um einen Wert abnimmt, der zwischen 10 % und 60% enthalten ist.

9. Verfahren nach einem der vorhergehenden Ansprüche, **dadurch gekennzeichnet, dass** es einen vorbereitenden Schritt umfasst, der darin besteht, eine Haltekraft zu messen, die erforderlich ist, um die pulverförmige Verbindung auf einem konstanten Volumen zu halten, das gleich dem Verdichtungsvolumen ist, und die Verdichtungskurve der pulverförmigen Verbindung zu bestimmen, die die Veränderungen der Haltkraft während des Haltens der pulverförmigen Verbindung auf einem konstanten Volumen, das gleich dem Verdichtungsvolumen ist, darstellt.

## Claims

1. A method for preparing a solid compact product with a determined volume from a powdery composition, **characterized in that** it comprises the following steps:
a) placing in a confined space an initial volume of a powdering composition containing at least one powder having elastic or thermofusible properties,
b)compacting said powdery composition from the initial volume down to a compaction volume less than or equal to the determined volume,
c)maintaining said composition at a constant volume equal to said compaction volume by means of a variable holding force until the holding force decreases by at least 10%,
d)releasing the volume constraint,
e)obtaining the solid compact product with the determined volume.

2. The method according to claim 1, **characterized in that** the powdery composition consists of particles having a size comprised between 10 and 3,000 microns.

3. The method according to any one of the preceding claims, **characterized in that** the amount of powdery composition applied in step a) is comprised between 0.5 grams and 100 grams.

4. The method according to any one of the preceding claims, **characterized in that** the compaction volume is comprised between 20% and 95% of the initial volume of the powdery composition.

5. The method according to any one of the preceding claims, **characterized in that** the time required for compaction in step b) is comprised between 1 millisecond and 3000 milliseconds.

6. The method according to any one of the preceding claims, **characterized in that** the time required for maintaining the composition at the compaction volume in step c) is comprised between 100 milliseconds and 2,500 milliseconds.

7. The method according to any one of the preceding claims, **characterized in that** the time required for releasing the volume constraint in step d) is comprised between 10 milliseconds and 1,000 milliseconds.

8. The method according to any one of the preceding claims, **characterized in that** in step c) the holding force decreases of a value comprised between 10% to 60%.

9. The method according to any one of the preceding claims, **characterized in that** it comprises a preliminary step consisting in measuring an holding force required for maintaining said powdery composition at a constant compaction volume equal to said compaction volume, and determining a compression curve of said powdery composition representing the variations of the holding force during the maintaining of the constant compaction volume.
